Europäisches Patentamt

European Patent Office

Office européen des brevets

(19)

(11) Publication number: **0 309 994**
**A2**

# EUROPEAN PATENT APPLICATION

(12)

(21) Application number: 88115889.3

(22) Date of filing: 27.09.88

(51) Int. Cl.4: **G06F 12/08**

(30) Priority: 28.09.87 US 102506

(43) Date of publication of application:
**05.04.89 Bulletin 89/14**

(84) Designated Contracting States:
**AT BE CH DE ES FR GB GR IT LI LU NL SE**

(71) Applicant: **Compaq Computer Corporation**
**20555 FM 149**
**Houston Texas 77070(US)**

(72) Inventor: **Culley, Paul R**
**13010 Marron Drive**
**Cypress Texas 77429(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

(54) Method and apparatus for implementing memory coherency.

(57) In a computer having a memory cache and a "force A20 low" function, a method is disclosed wherein the contents of a memory cache are cleared or flushed whenever the state of the "force A20 low" function changes in order to promote cached-memory coherency. Also disclosed is apparatus for performing the method.

FIG. 1

EP 0 309 994 A2

# METHOD AND APPARATUS FOR IMPLEMENTING MEMORY COHERENCY

This invention relates to a method for promoting cache-memory coherency in a computer system utilizing cached fast memory and capable of emulating a computer having a smaller address space, as well as apparatus for practicing the method.

For purposes of convenient illustration, certain aspects of an illustrative implementation are also described with regard to a computer system based on an Intel 80386 central processing unit (CPU) and utilizing an Intel 82385 cache controller, in which cache-memory coherency is to be maintained when the A20 address line is forced low. Reference is hereby made to the "Intel 80386 Hardware Reference Manual," Order No. 231732-1; the "Intel 80386 Programmer's Reference Manual," Order No. 230985-1; the "Intel 80386 System Software Writer's Guide," Order No. 231499-1; and the "Intel 82385 High Performance 32-bit Cache Controller," Order No. 290143-001; all of which are published by and available from Intel Corporation, Santa Clara, California.

Different computers use a variety of memory architectures including simple dynamic RAM, interleaved, static RAM, paged, and cache. The level of optimization achieved by each of these memory architectures has a significant effect on the overall system performance.

Many microcomputers use an architecture based on dynamic RAM (DRAM, pronounced dee-ram) devices. DRAM architectures offered simple designs for early microcomputers when CPU speeds did not demand a high performance memory subsystem. For those systems, affordable DRAM devices could easily be found to meet the demands of the CPU. As faster CPUs have been designed, however, simple DRAM designs have not been able to provide memory subsystems with sufficient performance.

The performance of DRAM architectures can be improved by interleaving the memory into two separate memory banks. One bank contains data for even double words and the second bank contains data for odd double words. A CPU reading sequential memory locations can simultaneously read data from one bank and start a memory access to the second bank.

A static RAM (SRAM, pronounced ess-ram) architecture avoids the wait states found in the dynamic RAM designs. SRAM devices operate at much higher speeds, making a no-wait-state memory subsystem possible. SRAM works well for relatively small memory subsystems, but it is often not economically practical in large memory subsystems because it takes up too much space and is relatively expensive.

A paged memory architecture is based on the characteristics of special RAM devices. These RAM devices allow consecutive accesses within the same "page" of memory to be much faster than accesses to different pages. The success of a paged memory architecture comes from the fact that with many software applications programs, approximately 60% of all the memory accesses occur consecutively within a 2-Kbyte page. This allows paged memory subsystems to achieve an average number of wait states slightly less than one.

Cache memory architectures have been used to improve the memory subsystem performance in minicomputers for some time. Generally speaking, the cache memory architecture combines features from the static-RAM and dynamic-RAM architectures. It uses a cache memory of fast (approx. 35 ns.), SRAM devices for no-wait-state operation, and a large system memory of relatively slower (approx. 100 ns.), DRAM devices for high capacity.

In microcomputers based on the Intel 8086 and 8088 CPUs, it is possible to address a memory location beyond the end of the permissible memory address range, yet actually access memory devices locations at the beginning of that range. This is a consequence of the segmented memory addressing scheme used by the 8088/8086 processors. Since the CPU only has 20 bits, the address "wraps" back to near address 0. The following equation describes the effect of the hardware.

physical address = (segment * 16 + offset) AND OFFFFFh

The MS-DOS operating system (Microsoft Corporation, Redmond, Washington) was to a great extent tailored to the 8088/8086 CPUs' addressing scheme. The present commercially available versions of MS-DOS express addresses in the segmented scheme just described. Applications programs running under MS-DOS can run on the 80386 in the 80386's "real" mode. In real mode, the 80386 behaves largely as if it were an 8086 or 8088 running at the 80386's relatively high speed.

Some programmers writing for the 8088 and 8086 CPUs made use of this "wraparound" feature to access memory at both ends without changing the segment register. In the class of machines exemplified by the Compaq Deskpro 286 and the IBM PC AT, however, the 80286 CPU has 24 address lines to allow access to more memory. Applications software ordinarily could not use the "wrap" feature, since accesses to memory above one megabyte were indeed legitimate and would not result in wraparound.

To solve this problem of backward compatability, architects of such computer systems commonly added a function to "force A20 low" under control of the system software to emulate the 8088/8086 wraparound behavior in "real" mode. This function was disabled by the system software whenever the CPU was put into "protected" mode to allow access of the additional address space. This was typically done by setting or clearing a specified bit of a device such as a keyboard controller.

Some more recent computers, such as those based on the Intel 80386 CPU, provide a similar "force A20 low" function, again for backward compatability.

In accordance with the present invention, in a computer having a memory cache and a "force A20 low" function, a method is disclosed wherein the contents of a memory cache are cleared or flushed whenever the state of the "force A20 low" function changes in order to promote cached-memory coherency. Also disclosed is apparatus for performing the method.

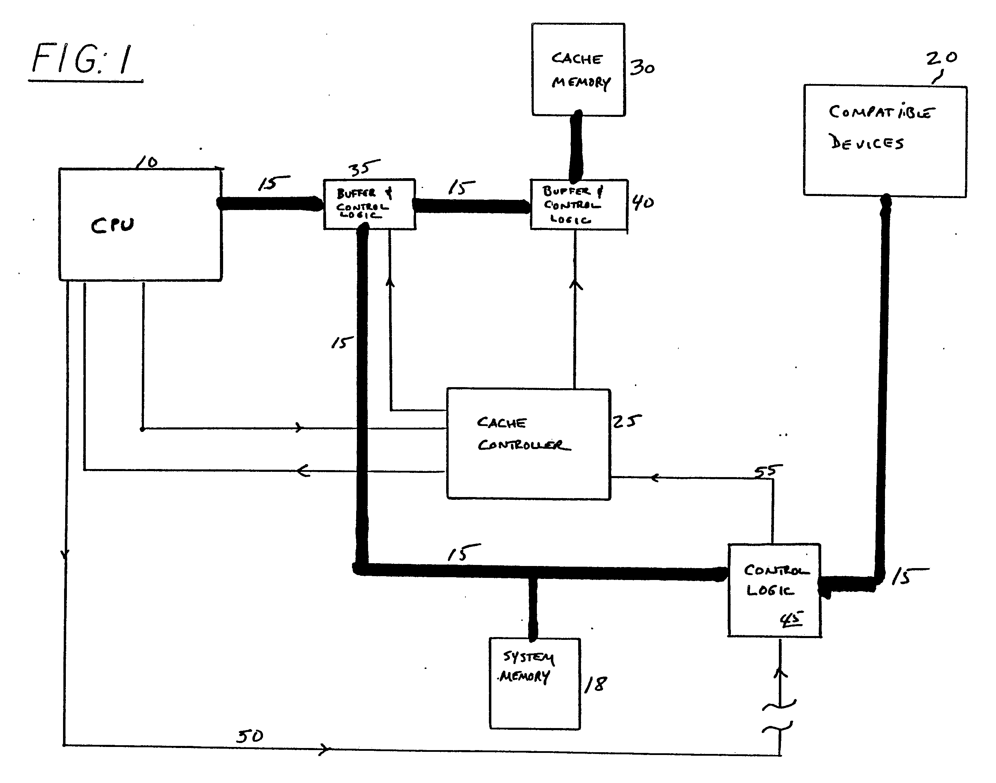

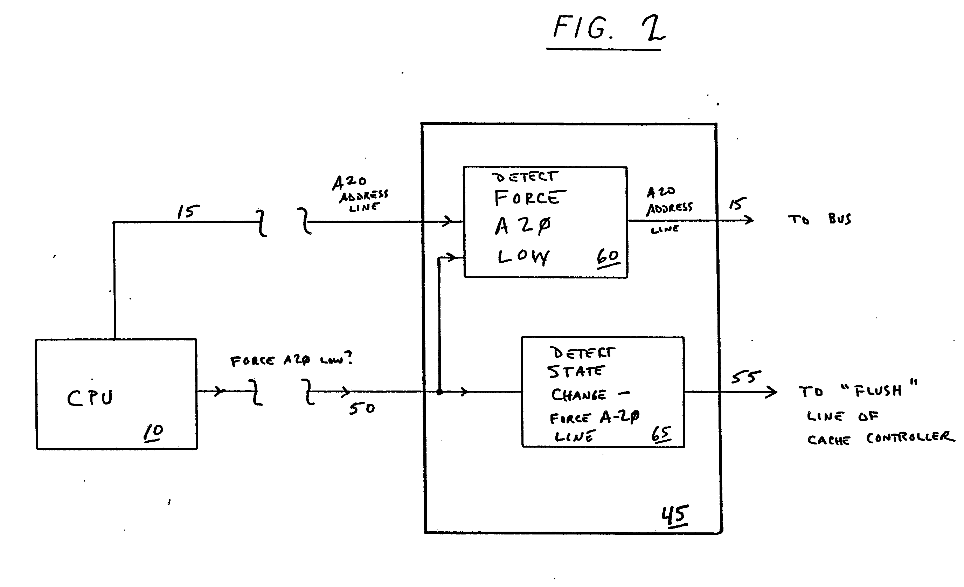

Figure 1 is a block diagram of a computer system equipped with a cached memory subsystem and including control logic to promote cache coherency in accordance with the present invention. Figure 2 is a block diagram of the control logic. Throughout the following detailed description, similar reference numerals refer to similar elements in all Figures of the drawings.

Referring to Fig. 1, a CPU 10 is linked via a bus 15 with system memory 18 and zero or more compatible devices 20 (e.g., I/O devices). Those of ordinary skill having the benefit of this disclosure will recognize that the bus 15 will normally include various address, data, status, and control lines, including the address line A20. A cache controller 25 determines whether memory access requests by the CPU 10 are served by a high-speed SRAM cache memory 30 or by system memory 18. A control logic 45 is illustrated more fully in Fig. 2 and its operation is described below.

The cache controller 25 keeps a copy of the most frequently used data or instructions in the cache memory 30. The CPU 10 submits requests for data or instructions from particular addresses in the system memory 18 to the cache controller 25 for processing. The cache controller 25 checks the cache memory 30 to determine whether the contents of the specified address in the system memory 18 are present. If not, the cache controller 25 retrieves the desired information from the specified memory location in system memory 18, passes those memory contents to the CPU 10, and additionally stores a copy of those contents in the cache memory 30.

The cache controller 25 causes a record to be kept of which memory locations in system memory 18 are duplicated in the cache memory 30 by setting a "valid bit" for those locations. Subsequent requests for a particular memory location already contained in the cache memory 30 can then be served from the cache memory 30 area without accessing the system memory 18. This is referred to as a "hit." Once the cache memory 30 has been filled with instructions and data, the cache controller 25 replaces the least frequently used data with the data most recently used by the CPU 10.

The cache memory 30 is described as "coherent" when the cache data corresponding to a given address in the system memory 18 is either the same as the actual data stored in the system memory at that address, or is marked invalid. The cache is not coherent, if, for some reason, the data in the cache memory 30 for a given address differs from the contents of the corresponding system memory 18.

To "flush" the cache memory 30 is to invalidate the entire contents of the cache memory at one time. This is generally done by clearing the valid bits to the invalid state.

To maintain coherency, it is necessary that any changes to the system memory 18 be reflected in the cache memory 30. Coherency problems arise whenever the state of the "force A20 low" function is changed. Such a change causes the address space seen by the cache controller to change drastically (all odd megabytes will change) thereby possibly causing an incoherent condition of the cache.

Referring now to Fig. 2, the control logic 45 includes a force-A20 logic 60 which receives an input 15 from the A20 address line within the bus 15 and an input 50 from the CPU 10, and which delivers an output to the A20 address line on the bus 15. When the CPU 10 actuates the input 50, the A20 address line is pulled low by the force-A20 logic 60.

The control logic 45 also includes a state-change logic 65 which detects state changes in the force-A20 input 50. When such a state change occurs, the state-change logic 65 actuates a FLUSH input 55 to the cache controller 25, causing the cache controller to clear all "valid" bits with regard to the cache memory 30.

It will be appreciated by those skilled in the art having the benefit of this disclosure that this invention as claimed below is believed to be capable of application in other situations. Accordingly, this description is to be construed as illustrative only and as for the purpose of teaching those skilled in the art the manner of carrying out the invention.

It is also to be understood that various modifications and changes may be made without departing from the spirit and scope of the invention as set forth below in the claims. It is intended that the following claims be interpreted to embrace all such modifications and changes.

## Claims

1. A method for maintaining coherency of the contents of a cached memory in a computer having a force-A20 function, the method comprising the step of flushing the cached-memory contents whenever the state of the force-A20 function changes.

FIG.1

FIG. 2

EP 0 309 994 A2